# EUROPEAN PATENT APPLICATION

(11) **EP 1 747 882 A1**
(43) Date of publication of application: **31.01.2007**
(21) Application number: 05739230.0
(22) Date of filing: 13.05.2005
(51) Int. Cl.: B32B 27/32, B32B 1/08, H01M 2/02

(54) **MULTILAYER HEAT SHRINKABLE FILM AND WRAPPED BATTERY**

(30) Priority: 18.05.2004 JP 2004147360
(71) Applicant: GUNZE LIMITED, Ayabe-shi, Kyoto 6238511 (JP)
(72) Inventor: WAKAI, Mutsumi, Plastic Film Division, Gunze Ltd., Shiga 5248501 (JP); OKUDA, Tomohisa, Plastic Film Division, Gunze Ltd., Shiga 5248501 (JP); MORIKAWA, Akira Plastic Film Division, Gunze Ltd., Shiga 5248501 (JP)
(74) Representative: Gille Hrabal Struck Neidlein Prop Roos
(86) International application number: PCT/JP2005/008776
(87) International publication number: WO 2005/110746

(57) **Abstract**

[PROBLEMS] Disclosed is a heat shrinkable film having excellent heat resistance, content resistance, impact resistance, low/high temperature cycle resistance, and abrasion resistance.

[MEANS FOR SOLVING PROBLEMS] Specifically disclosed is a heat shrinkable film comprising an intermediate layer (1), a front surface layer (2) and a back surface layer (3) so arranged as to sandwich the intermediate layer (1), and an overcoat layer (4) arranged on top of the front surface layer (2). The intermediate layer (1) contains first cyclic olefin resin and a random copolymer of ethylene and another α-olefin or a random copolymer of propylene and another α-olefin. The front surface layer (2) and the back surface layer (3) respectively contain second cyclic olefin resin and linear low-density polyethylene resin. Such a multilayer heat shrinkable film is formed into a tubular shape in such a manner that the overcoat layer (4) is on the outside. A secondary battery is fitted into the thus-formed tube of the multilayer heat shrinkable film and the tube is heat shrunk, so that there is obtained a wrapped battery.

## Description

### Technical Field

The present invention generally relates to multilayer heat shrinkable films, and more specifically to a multilayer heat shrinkable film improved to have excellent abrasion-resistance and weather resistance. The present invention also relates to wrapped batteries wherein the battery is wrapped with the multilayer heat shrinkable film every 1 piece.

### Background Art

Secondary batteries, which are reusable by repeated charging, do not use cadmium, lead, and mercury, and therefore are environmentally acceptable. Secondary cells are also easily recyclable after being used, and therefore are in increasing demand day by day.

Primary batteries and secondary batteries generally cannot have the side walls of their main bodies, which are the surfaces of the negative electrodes, painted directly. In view of this, in order to allow for painting and to protect the side surfaces from the external environment by electrical insulation, the batteries are each wrapped in a wrapping film that is subjected to printing separately.

Wrapping films for batteries are required to be easily recyclable. Other various kinds of severe quality performance are also required of wrapping films especially for secondary batteries, which are used by repeated charging (300 to 500 times). While requirements for wrapping films vary depending on battery manufacturers and kinds of the secondary cell, the following are general items for evaluation.

The term "wrapping", as used herein, refers to wrapping a piece of battery (hereinafter referred to as a single battery), as opposed to wrapping a plurality of collected batteries to one.

One of the requirements for wrapping films for batteries is excellent heat resistance. This is because batteries are used by repeating charging a significantly large number of times. (This kind of batteries is expected to be dominant in the future.) Excellent heat resistance is required also because secondary batteries of the rapid charging type (e.g., 10-20 minutes of charging time) are subjected to heat more frequently on each occasion of charging. Also, films with higher heat resistance are required because batteries may be used in higher-temperature environments. Heat resistance is required to such an extent that after one day of storage at at least 100°C, the wrapping film shows no change such as wrinkles and coloring, as well as cracks and tearing.

A second requirement is content resistance; specifically, resistance to the electrolytic solution (including an alkaline solution and acidic solution) within primary or secondary batteries. This is because secondary cells, in particular, are used repeatedly a large number of times, and there is a possibility of effusion of the electrolytic solution through the repeated use, though it is a minimum amount. The wrapping film must not be corroded by the electrolytic solution. For example, when the electrolytic solution is alkaline, the film is generally required to show no change such as change in size, as well as wrinkles, cracks, and breaks, after one day of immersion of the film in the alkaline electrolytic solution itself or in a 30% KOH solution at room temperature.

A third requirement is impact resistance. This is because batteries are used repeatedly a large number of times, and may be erroneously falled during the repeated use. The wrapping film must not be damaged by the falling impact. While the degree of impact varies depending on the falling height and the falling plane, the film is required to show no change such as damage after the battery is falled from a height of 1 m onto a plane of hardwood such as oak. In relation to this impact resistance, the film is also required to, as well as having no damage, prevent losing of the battery out of the film, after falled in the same manner in an extremely low temperature, e.g., -20°C, as well as in ordinary temperature.

A fourth requirement is low/high temperature cycle resistance. For evaluation, generally, the film is heated at temperature in the range -20-80°C for an hour, and then the temperature is changed to another temperature, which takes another one hour. This is assumed as one cycle and repeated to 100 cycles. The film in the wrapping state is required to show no change such as dislocation, wrinkles, and breaks.

Other requirements are excellent abrasion-resistance and weather resistance. The requirement for abrasion-resistance is because the battery, through its repeated use, is put in and out of the charger and the battery storage portion of apparatuses extremely frequently, and the film is subjected to abrasion in each case, resulting in breakage in due time. In view of this, a wrapping film having more excellent abrasion-resistance is in need.

As the wrapping film for batteries, conventionally, a heat shrinkable tube made of one of polyvinyl chloride resin, polyester resin, and polystyrene resin is known. However, because of pollution problems, the society is on its way out of polyvinyl chloride, and thus polyvinyl chloride tubes are not used. Polyester films and polystyrene films are used instead of polyvinyl chloride, but not satisfactory. Specifically, polyester films are not provided with resistance to the alkaline electrolytic solution, in particular. Polystyrene films have drawbacks including lack of impact resistance, being easily damaged especially when handled in low temperature environments, and poor resistance to abrasion.

As resin to overcome the drawbacks of the above resins, polyolefin resin is being studied. Specifically, polyolefin resin is described as follows.

A random copolymer of ethylene and cyclic olefin resin and/or a ring-opened polymer of cyclic polyolefin or a hydrogenated product of the polymer (hereinafter referred to as A component) is prepared. Also prepared is olefin resin (hereinafter referred to as B component), except A component, having a storage modulus of 5×10⁹ dyn/cm² or greater under the conditions of 10 Hz frequency and 30°C temperature (for example, polyethylene with from-low-to-high density, a propylene-ethylene elastomer, and an ethylene-vinyl-acetate copolymer). Components A and B are blended at A/B=60-50/40-50 (by weight). This is further blended with a plasticizer of 1-25 parts by weight (of the total amount of the blended product). The obtained mixture is extruded from a cyclic dice directly into the form of a tube and then drawn, followed by radiation exposure for crosslinking, thus obtaining a heat shrinkable tube.

Use of this heat shrinkable tube for wrapping secondary batteries is exemplified (see, for example, patent document 1). Here, the purpose of using A/B/plasticizer mixture is to improve a good shrinkage finish and good wrapping processability when wrapping batteries or the like by giving alkaline resistance and drawability and heat shrinkability in low temperature. Radiation exposure is carried out in order to provide the tube with heat resistance.

There is also a heat shrinkable tube known as the cyclic polyolefin heat shrinkable tube, though use thereof for wrapping batteries is not described (see, for example, patent document 2). This heat shrinkable tube is obtained by mixing 100 parts of cyclic polyolefin copolymer resin with 2-50 parts of another olefin resin (e.g., polyethylene, an ethylene-vinyl acetate copolymer, and the like) and equal to or less than 10 parts of a compatibilizer. This heat shrinkable tube is also obtained by being extruded from a cyclic dice directly into the form of a tube and then drawn. Addition of the compatibilizer, which is one of the above three components, is for the purpose of improving the compatibility between the cyclic polyolefin copolymer resin and the other olefin resin, providing appropriate flexibility, and improving workability and automatic machine suitability.

The heat shrinkable tubes described in the two patent documents have single layers and have a plasticizer and compatibilizer blended in the tubes, and thus are provided with concealability, resulting in lack of transparency. Further, these heat shrinkable tubes are molded all at once by being extruded from a cyclic dice directly into the form of a tube and then drawn. One major drawback of the method of direct molding of a tube is that desired printing cannot be carried out. First, the film is opaque and therefore printing on the back surface is impossible. For printing on the front surface, because printing is impossible on a flat-film stage, the printing must be carried out, after wrapping batteries, onto the side surface of each battery, which is a curved surface. This provides poor production efficiency, and, there is an extremely high possibility of removal of the printed design because of printing on battery surfaces.
Patent document 1: Japanese Patent Application Publication No. 11-90983.
Patent document 2: Japanese Patent Application Publication No. 07-32503.

### DISCLOSURE OF THE INVENTION

In view of the foregoing and other problems, it is an object of the present invention to provide a multilayer heat shrinkable film having excellent alkaline resistance, heat resistance, impact resistance, low/high temperature cycle resistance, and abrasion-resistance.

It is another object of the present invention to provide a multilayer heat shrinkable film with easy incineration disposal.

It is another object of the present invention to provide a multilayer heat shrinkable film with easy recicle.

It is another object of the present invention to provide a multilayer heat shrinkable film that sufficiently meets the various conditions required of a wrapping film for batteries, especially secondary batteries.

It is another object of the present invention to provide a wrapped battery wrapped in such a multilayer heat shrinkable film.

It is another object of the present invention to provide a wrapped battery that eliminates the possibility of dropping the printed design out.

The multilayer heat shrinkable film according to the present invention comprises: an intermediate layer; a front surface layer and a back surface layer so arranged as to sandwich the intermediate layer; and an overcoat layer arranged on top of the front surface layer. The intermediate layer contains first cyclic olefin resin and a random copolymer of ethylene and another α-olefin or a random copolymer of propylene and another α-olefin. The front surface layer and the back surface layer respectively contain second cyclic olefin resin and linear low-density polyethylene resin.

Preferably, the random copolymer is included by 95-55 mass% and the first cyclic olefin resin is included by 5-45 mass% in the intermediate layer. The second cyclic olefin resin is included by 55-90 mass% and the linear low-density polyethylene resin is included by 45-10 mass% in the front surface layer and the back surface layer, respectively.

The α-olefin preferably has 2 to 12 carbon atoms.

The overcoat layer is preferably formed of acrylic resin, urethane resin, or nylon resin, and more preferably formed of acrylic resin.

The intermediate layer is preferably thicker than the front surface layer and the back surface layer.

The entire thickness is preferably 30-80 µm.

The thickness of the overcoat layer is preferably 0.2-2.0 µm, and more preferably, 0.5-1.5 µm.

The multilayer heat shrinkable film is preferably in the form of a tube formed by folding a flat multilayer heat shrinkable film, with the overcoat layer on the outside and both ends of the flat multilayer heat shrinkable film overlapping. The overlapping ends are sealed with a solvent.

Another aspect of the present invention relates to a battery wherein the whole is wrapped with a multilayer heat shrinkable film excluding a positive electrode portion formed on the top surface of the battery and a portion of the negative electrode formed on the bottom surface of the battery. The multilayer heat shrinkable film has an intermediate layer, a front surface layer and a back surface layer so arranged as to sandwich the intermediate layer, and an overcoat layer arranged on top of the front surface layer. The intermediate layer contains first cyclic olefin resin and a random copolymer of ethylene and another α-olefin or a random copolymer of propylene and another α-olefin. The front surface layer and the back surface layer respectively contain second cyclic olefin resin and linear low-density polyethylene resin. The multilayer heat shrinkable film is processed into the form of a tube with the overcoat layer on the outside. The tube of the multilayer heat shrinkable film is placed over the battery as if to wrap the battery and heat shrunk.

The multilayer heat shrinkable film is preferably in the form of a tube formed by folding a flat multilayer heat shrinkable film, with the overcoat layer on the outside and both ends of the flat multilayer heat shrinkable film overlapping. The overlapping ends are sealed with a solvent.

Preferably, the random copolymer is included by 95-55 mass% and the first cyclic olefin resin is included by 5-45 mass% in the intermediate layer. The second cyclic olefin resin is included by 55-90 mass% and the linear low-density polyethylene resin is included by 45-10 mass% in the front surface layer and the back surface layer, respectively.

The α-olefin preferably has 2 to 12 carbon atoms.

The overcoat layer is preferably formed of acrylic resin, urethane resin, or nylon resin, and more preferably formed of acrylic resin.

The intermediate layer is preferably thicker than the front surface layer and the back surface layer.

The thickness of the overcoat layer is preferably 0.2-2.0 µm, and more preferably, 0.5-1.5 µm.

When the battery is a secondary battery, particularly preferable advantageous effects are obtained.

According to the present invention, a battery wrapped in a (electrical insulating) wrapping film having excellent alkaline resistance, heat resistance, impact resistance, low/high temperature cycle resistance, and abrasion-resistance is obtained.

This wrapping film is environmentally friendly, easy to incinerate, and easy to process for recycling.

The wrapping film can be easily coated over a battery in the following manner. A flat multilayer heat shrinkable film is folded with the overcoat layer on the outside and both ends of the flat multilayer heat shrinkable film overlapping. The overlapping ends are sealed with a solvent, thus forming a tube. The tube is placed over the battery as if to wrap the battery and then heat shrunk.

This flat film is also excellent in transparency, and the flat nature of the film enables it to print the desired design onto the inner surface of the film in advance. Thus, the film provides high production efficiency and eliminates problems associated with printing.

The wrapping film according to the present invention is more effective for wrapping of secondary batteries than primary batteries.

### BRIEF DESCRIPTION OF THE DRAWINGS

Fig. 1 is a cross sectional view of a multilayer heat shrinkable film according to the present invention.
Fig. 2 is a plan view of a layout of an example of a printed design.
Fig. 3 is a schematic perspective view of a center-sealing apparatus using a solvent.
Fig. 4(A) is a perspective view of a tube film for a single battery. Fig. 4(B) is a cross sectional view of the tube film taken along the line B-B in Fig. 4(A).
Fig. 5(A) is a perspective view of the tube film and the battery, showing a state in which the tube film is placed over the battery as if to wrap the battery. Fig. 5(B) is a perspective view of the battery wrapped in the tube film. Fig. 5(C) is a view showing the bottom of the battery wrapped in the tube film.
Fig. 6 is a plan view of a layout of an example of an overcoat layer (D).

- 1: Intermediate layer
- 2: Front surface layer
- 3: Back surface layer
- 4: Overcoat layer
- 5: Film overlapping at the center
- 5a: Seal margin
- 5c: Center seal portion sealed with a solvent
- 6: Application nozzle of a solvent
- 7: Nip roll
- 10: Tube film for a single battery
- 1/2d: Non-printed portion (top and bottom surface edges)
- 11: Battery
- 20: Printed design portion laid out on a flat film

### BEST MODE FOR CARRYING OUT THE INVENTION

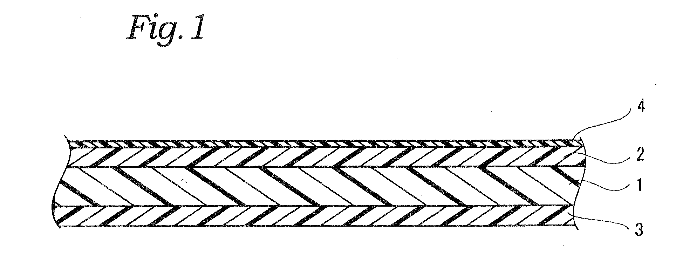

Fig. 1 is a cross sectional view of a multilayer heat shrinkable film according to the present invention. Referring to Fig. 1, the multilayer heat shrinkable film has an intermediate layer 1, and a front surface layer 2 and a back surface layer 3 so arranged as to sandwich the intermediate layer 1. An overcoat layer 4 is arranged on top of the front surface layer 2, thus obtaining a four-layered structure.

### (Intermediate layer)

First, the intermediate layer contains first cyclic olefin resin and a random copolymer of propylene and another α-olefin or another resin composition mainly composed of the copolymer. In the intermediate layer contains the random copolymer is included by 95-55 mass% and the first cyclic olefin resin is included by 5-45 mass% (hereinafter referred to as resin A).

The intermediate layer is composed of resin A by the following reasons.

First, heat resistance, content resistance, impact resistance, low/high temperature cycle resistance, which are particularly important among the conditions required of wrapping films for batteries, are obtained extremely preferably. Also, it is easy to obtain, as a wrapping film, excellent heat shrinkability and appropriate supportability. That is, an easy-to-handle film with resilience, not excessively hard and not excessively soft, is obtained.

The term "excellent shrinkability" refers to a property exhibiting greater shrinkability in the lateral direction while realizing wrapping by heat shrinkage in the longitudinal direction without posing any problems such as wrinkles and tearing during heat shrinkage in the lateral direction. As a result of the exhibited excellent shrinkability, tight contact is secured without wrinkles by inward shrinkage at the top and bottom surface edges of the battery where wrapping is particularly difficult (i.e., the area inwardly extending from the edge of the top surface of the battery, where the positive electrode cap is located, and the area inwardly extending from the edge of the bottom surface of the battery, where the negative electrode is located).

The resin A is a novel resin obtained by a random copolymer of propylene and another α-olefin or another resin composition mainly composed of the copolymer as the main component with cyclic olefin resin (hereinafter referred to as COP resin). The resin components are described in detail below.

Resin in which propylene, as the main component, and α-olefin with 2 to 12 carbon atoms (excluding 3) are copolymerized at random is as follows.

As α-olefin, ethylene, 1-butene, 1-hexene, and 1-octene are preferable. Two or more of these α-olefins can be used.

While it is also possible to use a mixture of different types (including difference in the MFR (melt flow rate)) of propylene-α-olefin random copolymers, a propylene-ethylene random copolymer or a propylene-ethylene-α-olefin tertiary random copolymer is more preferably used. Further more preferably, a propylene-ethylene random copolymer having an ethylene content of 2 to 8 mol% is used.

The invention is not limited to the simple use of above random copolymer. Use of a resin composition mainly composed of the above random copolymer provides similar advantageous effects. In the case of a resin composition, other resins are blended in the above random copolymer. Other resins may be those that maintain the above advantageous effects realized by the random copolymer, and that help to improve heat shrinkability and/or impact resistance, in particular. Examples of resins for blending include petroleum resin for improving heat shrinkability, and for improving impact resistance, a polyolefin thermoplastic elastomer (hereinafter referred to as POE resin) formed by a random copolymerization of ethylene or propylene and another α-olefin. More preferable among these is use of both petroleum resin and POE resin, which helps to improve both heat shrinkability and impact resistance.

As petroleum resin, for example, aliphatic hydrocarbon resin, aromatic hydrocarbon resin, alicyclic hydrocarbon resin, a hydrogenated product of the foregoing, rosin, rosin ester, terpene resin, or the like can be used. Among these, a hydrogenated product of the foregoing is preferable.

As POE resin, first, ethylene-butene-1 random copolymer, which is a random copolymer of ethylene and another α-olefin is preferable. In a preferable ethylene-butene-1 random copolymer, the ethylene content is in the range 85-95 mol% and the density is in the range 0.86-0.91, and α-olefin has C3-C5, preferably C4. As another preferable POE resin, propylene-butene-1 random copolymer, which is a random copolymer of propylene and another α-olefin, is exemplified. In a preferable propylene-butene-1 random copolymer, the propylene content is in the range 85-95 mol% and the density is in the range 0.86-0.91, and α-olefin has C3-C5, preferably C4. More preferable between the two is POE resin of a random copolymer of ethylene and another α-olefin.

These POE resins are non-crystalline or low crystalline.

The ratio of the petroleum resin when the petroleum resin is added to the random copolymer of propylene and another α-olefin is preferably 20-60 mass parts, more preferably 30-50 mass parts per 100 mass parts of the random copolymer. With less than 20 mass parts, the effect of helping to further improve heat shrinkability, which is expected to appear by blending COP resin in the random copolymer, cannot be obtained. With greater than 60 mass parts, the discharge pressure of film molding becomes easy to fluctuate, making it difficult to carry out stable molding.

The ratio of the POE resin when the POE resin is added to the random copolymer of propylene and another α-olefin is preferably 10-20 mass parts, more preferably 13-18 mass parts per 100 mass parts of the random copolymer of propylene and another α-olefin. With less than 10 mass parts, the effect of helping to further improve impact resistance, which is expected to appear by the random copolymer, cannot be obtained. With greater than 60 mass parts, natural shrinkage becomes easy to occur, in particular. If natural shrinkage occurs, the tube diameter becomes small, making it impossible to put the battery in the tube. In addition, the tube becomes excessively soft, providing poor resilience required of wrapping films. Thus, appropriate supportability cannot be obtained.

COP resin, which is a minor component, is as follows.

For example, a random copolymer of ethylene or propylene and cyclic olefin (e.g., norbornene and a derivative thereof, and tetracyclo dodecen and a derivative thereof), (b) a ring-opened polymer of the cyclic olefin or a copolymer of the cyclic olefin and α-olefin, (c) a hydrogenated product of the polymer in (b), and (d) a graft-modified product of (a)-(c) by unsaturated carboxylic acid and a derivative thereof, or the like can be used.

The number-average molecular amount of COP resin measured by the GPC (Gel Permeation Chromatography) method is preferably 1000-1000000, and the glass transition temperature is preferably 60-90°C, more preferably 65-80°C. The glass transition temperature influences natural shrinkage and heat shrinkability in the lateral direction. With lower than 60°C, natural shrinkage becomes easy to occur, while with higher than 90°C heat shrinkability in the lateral direction becomes small especially in low temperature, making it difficult to provide wrapping by heat shrinkage in low temperature.

While the intermediate layer (A) is formed by film molding of the above blend resin, in order to more preferably accomplish the above advantageous effects, it is required to perform blending at a constant ratio. The blend ratio is as follows.

The COP resin is 5-45 mass% against 95-55 mass% of the random copolymer of propylene and another α-olefin or against 95-55 mass% of the resin composition including the random copolymer as main component. This is because if the random copolymer or the resin composition exceeds 95 mass%, and the cyclic olefin resin is less than 5 mass%, then more improved heat shrinkability cannot be helped to appear. In addition, softness of the film becomes dominant, and thus appropriate supportability of the film becomes difficult to obtain. Preferably, the COP resin is 6-35 mass% against 94-65 mass% of the random copolymer of propylene and another α-olefin or against 94-65 mass% of the resin composition including the random copolymer as main component. More preferably, the COP resin is 7-30 mass% against 93-70 mass% of the random copolymer of propylene and another α-olefin or against 93-70 mass% of the resin composition including the random copolymer as main component.

If, on the other hand, the random copolymer of propylene and another α-olefin or the resin composition including the random copolymer as main component is less than 55 weight%, and the cyclic olefin resin exceeds 45 weight %, then impact resistance and low/high temperature cycle resistance, in particular, tend to be adversely affected. In addition, this leads to degradation of transparency (haze).

Known substances such as an antistatic agent, lubricant, anti-UV agent, stabilizer, coloring agent, linear low-density polyethylene, and other resins can be added suitably.

While as the intermediate layer, resin containing the first cyclic olefin resin and a random copolymer of propylene and another α-olefin or another resin composition including the random copolymer as main component has been exemplified, the present invention will not be limited to the resin. Resin containing the first cyclic olefin resin and a random copolymer of ethylene and another α-olefin or another resin composition including the random copolymer as main component can be used. The intermediate layer contains the random copolymer at 95-55 mass% and the first cyclic olefin resin at 5-45 mass%.

### (The front surface layer and the back surface layer)

Referring to Fig. 1, the front surface layer 2 and the back surface layer 3 respectively contain second cyclic olefin resin and linear low-density polyethylene resin. In the front surface layer and the back surface layer respectively, the second cyclic olefin resin is included by 55-90 mass% and the linear low-density polyethylene resin is included by 45-10 mass% (hereinafter referred to as resin B).

Use of the resin B to constitute the front surface layer 2 and the back surface layer 3 is for the following reasons.

The main reason is easiness of tube molding by center sealing with a solvent. This sealing method is more rapid than center sealing with an adhesive, heat fusion, high frequency, or the like, and assures flow-line molding, and provides adhesion with greater strength. Thus, the sealed portion is flat and has a visually preferable finish.

As another reason, excellent heat shrinkability provided by the intermediate layer (resin A) is helped to further improve. The term "further improvement" means that shrinkage and tight are beautifully and easily done from the edges of the top and bottom surfaces to the inside of the battery. Also, excellent film molding provided by the intermediate layer (resin A) and drawability for excellent heat shrinkability of the intermediate layer (resin A) are not impaired but promoted. The heat resistance, content resistance, impact resistance, and low/high temperature cycle resistance of the intermediate layer (resin A) are of course not impaired when the above advantageous effects appear.

In the resin B, the COP resin, which is the main component, is as described above.

While the COP resin here can be the same kind as or different kind from that of the intermediate layer (resin A), the same kind of COP resin is preferably used.The density of the linear low-density polyethylene resin (hereinafter referred to as LLDPE), which is a minor component, is preferably 0.910-0.935 g/cm³, most preferably 0.915-0.925 g/cm³, and the melt flow rate (MFR) is preferably 0.2-30 g/10min (190°C, 21.18N).

Specifically, it is linear low-density polyethylene in which ethylene and a small amount of α-olefin (e.g., at least one kind of α-olefin having C4-C8) are copolymerized using a Ziegler Natta catalyst or a metallocene catalyst. As α-olefin of this kind, 1-butene and/or 1-hexene are preferable, and 1-hexene is more preferable, that is, a binary copolymer of ethylene and 1-hexene.

While basically the LLDPE produced by using either a Ziegler Natta catalyst or a metallocene catalyst is preferred, LLDPE produced by a metallocene catalyst is preferable, considering smoother film extrusion and drawing characteristic and the blocking resistance of the obtained three-layered film or the like.

While the front surface layer and the back surface layer (hereinafter referred to as front and back layers (resin B)) are formed by film molding of the above blend resin, in order to more preferably accomplish the above advantageous effects, it is required to perform blending at a preferably constant ratio. As the preferably blend ratio, the COP resin is 55-90 mass%, preferably 60-80 mass%, and the LLDPE is 45-10 mass%, more preferably 40-20 mass%.

If the blend ratio of the LLDPE exceeds 45 mass% and that of the COP resin is less than 55 mass%, then the rate of center sealing using a solvent becomes slow, thereby adversely affecting productivity. This is because the dissolution speed on the surface is too slow. In addition, the above-described further improved heat shrinkability becomes difficult to obtain, and degradation of the transparency of the wrapping film itself is caused.

If, on the other hand, the LLDPE is less than 10 mass% and the COP resin exceeds 90 mass%, then, at the sealing with the solvent, the sealed portion becomes easy to become white, and if this continues, the sealed portion starts to have wrinkles. This is due to excessive erosion of the solvent. In addition, when continuous corona discharge is carried out in order to improve the adhesivity of the front surface or the back surface, surface smoothness degrades and thus rolling-up troubles are easy to occur. Further, film hardness increases and thus smooth film molding and smooth drawing become difficult to carry out. This is due to the fact that when the high-magnification is set aiming at the intermediate layer (resin A), and the three layers are extended, the front and back layers (B) can not follow to it. Even if this is molded, when the film is touched by hand, fine cracks appear on the touched portion, which leads to whitening.

While for the resin B of the front and back layers (resin B), one kind of resin is used, respectively, at the same blend ratio, a plurality of kinds of resin may be used and different blend ratios may be used.

In this resin B, known substances such as an antistatic agent, anti-blocking agent, lubricant, anti-UV agent, stabilizer, petroleum resin, and linear low-density polyethylene can be added as additives by a small amount, within the range where the essence of the invention is not ruined. Among these, addition of a small amount of an anti-blocking agent such as silica is suitable.

In the course of molding the above-obtained three-layered film, scraps may be left, and these scraps can be reused by grinding. When reused, the scraps are preferably mixed in the resin A (virgin resin) of the intermediate layer (resin A). The mixture is of course within the specified range for the blend ratio. When the scraps are blended, a small amount of LLDPE is mixed in the intermediate layer (resin A), and this amount is kept equal to or less than 5 mass%. With equal to or less than 5 mass%, the advantageous effects of the intermediate layer (resin A) are not adversely affected.

### (Overcoat layer)

Referring to Fig. 1, an overcoat layer 4 provided on the front layer side of the front and back layers 2 and 3 (B) is as follows. First, this overcoat layer 4 is provided mainly to give more of heat resistance and abrasion-resistance.

The heat shrinkable film composed of the intermediate layer 1, the front surface layer 2, and the back surface layer 3 has the above heat resistance and abrasion-resistance required of secondary batteries. However, further improvement of heat resistance is required in the case of, for example, an increased number of times of repeated charging, repeated use by rapid charging, and use in high temperature environments.

In the case of repeated charging, the battery is put in and out of the charger frequently, and there is contact between the charger and the wrapping film surface in each case. Thus, further improvement of abrasion-resistance against the contact is required. For improvement of heat resistance and abrasion-resistance, it is needed to take measures beforehand, considering the above environments in which the battery is used. This is realized by providing the overcoat layer 4 at least on the front surface layer 2.

Thus, the overcoat layer 4 is required to be formed of resin capable of exhibiting at least further heat resistance and abrasion-resistance. In addition, resin providing good adhesivity with the front surface layer 2 without undermining the above other characteristics is required, and it is more preferable to have anti-blocking characteristics and smoothness.

As resin to form the overcoat layer 4, acrylic resin having appropriate flexibility, urethane resin, and nylon resin of preferably N10 or more are exemplified. Among these, acrylic resin is preferable.

Since the overcoat layer 4 is provided in a preferable manner by coating, the resin is required to be dissolvable in, for example, toluene, ethyl acetate, methyl ethyl ketone, or isopropyl alcohol.

In the resin (resin D) used for the overcoat layer 4, a small amount of an anti-blocking agent (e.g., polyethylene wax) or lubricant (e.g., fluorine wax, silicone oil) can be added.

### (Thickness)

Next, the thickness of the heat shrinkable film composed of the intermediate layer (resin A) and the front and back layers (resin B) is described.

In the wrapping film, the intermediate layer 1 (resin A) is preferably thicker than the front and back layers 2 and 3 (resin B). Specifically, the total thickness of the heat shrinkable film is preferably 30-80 µm. This is for the purpose of obtaining appropriate supportability and maintaining appropriate strength. In this total thickness, the ratio is: the front surface layer/intermediate layer/back surface layer=1/2-10/1, preferably the front surface layer/intermediate layer/back surface layer=1/3-7/1, more preferably the front surface layer/intermediate layer/back surface layer=1/3-5/1.

The overcoat layer 4 (after drying) is preferably as thin as possible insofar as the overcoat layer 4 adheres to the front surface layer 2 and thus provides great heat resistance. To exemplify the thickness, 0.2-2.0 µm is preferable, and 0.5-1.5 µm is more preferable.

### (Production of the tube film)

Next, a method of production of a flat wrapping film (hereinafter simply referred to as a flat film), molding of this flat film into the form of a tube, and finally, wrapping of a battery with this tube will be described in this order.

First, a heat shrinkable film composed of three layers, the intermediate layer (resin A) and the front and back layers (resin B), is produced. As a method of production of the film, three-layer coextrusion by the tubular method and three-layer coextrusion using a T-die are exemplified. Because the latter is preferable, it will be mainly described.

First, for the resin A and resin B that have been set, respective materials for molding are obtained by dry blend or melting and kneading. The materials for the resin A are supplied into one of three extruders, and the materials for the resin B are supplied into the other two extruders. The materials are simultaneously extruded from the extruders that are set to a predetermined temperature toward a three-layer T-die that is set to a predetermined temperature so that the resin A is arranged in the middle and the resin B is arranged on both sides of the resin A. Here the resins are laminated integrally, and this lamination is solidified by cooling with a chilled roll. The lamination is then roll-drawn in the longitudinal direction at a predetermined magnification, and tenter-drawn in the lateral direction at a predetermined magnification. The three-layered film that has been drawn longitudinally and laterally is then cured by heating and cooled, and rolled up. Thus, the desired flat three-layered heat shrinkable film is molded.

When corona discharge is further carried out, this is subsequent to the heat curing and cooling. This is carried out continuously. While the film that has been subjected to the corona discharge is rolled up and sent to subsequent steps (the printing step and coating step of the overcoat layer (resin D)), before these steps, the film that has been subjected to the corona discharge and rolled up is preferably subjected to aging in order to remove internal distortion. This processing is carried out by letting the film stand for 20-30 hours at 30-40°C.

While at the time of drawing it is not necessarily essential to carry out drawing in the longitudinal direction, in order to improve easy tearing in the lateral direction, a slight amount of drawing is preferably carried out in the longitudinal direction.

Specifically, the following conditions are preferable. For roll drawing in the longitudinal direction, the temperature of a preheat roll is set to 70-90°C. The temperatures of a first nip roll and second nip roll for drawing are set to 80-95°C. The drawing magnification is 1.05-1.30 times. The drawing time is 0.1-0.3 second.

For tenter-rolling in the lateral direction, which is subsequently carried out, the film is sufficiently preheated at, for example, 110-120°C. The drawing zone is separated into at least two zones, and the temperature at the entrance of the drawing zone is set to equal to or less than 95°C and the temperature of the exit of the drawing zone is set to equal to or less than 85°C. The drawing magnification is 4.5-5.5 times, and the drawing time is 5-12 second.

The above heat curing is carried out in order to prevent natural shrinkage. For example, it is carried out with 3-8% of relaxation at 70-80°C for 4-7 seconds. The three-layered heat shrinkable film thus obtained had a heat shrinkage in the lateral direction of approximately 40-60%, after immersion in hot water of, for example, 90°C for 10 seconds.

The tearing propagation strength in the longitudinal direction is as small as 800-350 mN, and thus the film can be easily torn in the longitudinal direction after use. Thus, after mounted on a battery, the film can be easily separated off the battery. In addition, because the specific gravity of the separated film is less than 1, easy separation off the battery is possible, whether by water separation or wind separation.

When the three-layered heat shrinkable film thus obtained is used without printing, the overcoat layer (resin D) is provided on the surface to be the front surface layer (resin A), thus obtaining a wrapping film. However, generally, printing is further carried out, and before providing the overcoat layer (resin D), the film is sent to the following printing step.

The printing carried out here is gravure printing with gravure ink containing resin having preferable adhesivity such as a mixture of urethane resin and nitrocotton, and acrylic resin. While the surface to be printed can be either on the front layer side or the back layer side, in order to prevent dirt on the printed image and separation of the printed image and to maintain a shiny surface, the back surface layer (i.e., the surface to be the inner surface of the resulting label) is preferably printed.

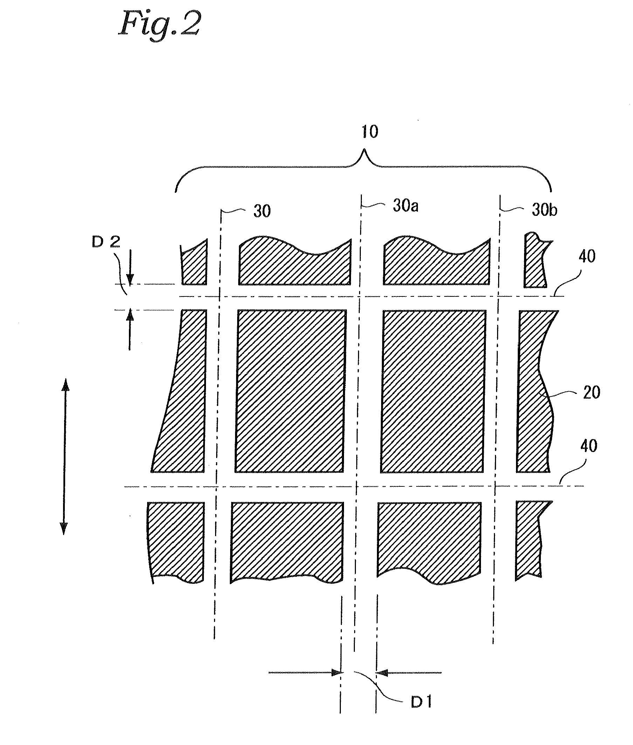

Regarding the printed picture, a picture (generally, the entire side surface of a battery) required for a single battery is taken as one unit, and a plurality of such pictures are laid out longitudinally and laterally at constant intervals. This will be described referring to Fig. 2 (plan view).

Referring to Fig. 2, reference numeral 20 denotes one unit of a picture, and constant intervals D1 and D2 are provided longitudinally and laterally. D1 and D2 are non-printed portions. The intervals D1 and D2 are provided because cutting is carried out in the non-printed portions in order to obtain a wrapping tube for a single battery. The provided interval (width) is preferably an effective width leaving no cutting waste. The effective width in the longitudinal width (D1) is determined by how much center seal margin is provided, and the effective width in the lateral width (D2) is determined by how much width of wrapping (bending internally and wrapping) is provided for a certain portion of the top surface (the positive electrode side) and a certain portion of the bottom surface (the negative electrode side) of the battery. In addition to this, the widths are determined considering the degree of heat shrinkage when the battery is wrapped.

After printing of the plurally laid-out pictures, the film is turned over and the overcoat layer (resin D) is coated on the surface opposite the printed surface. The coating of the overcoat layer is preferably by gravure printing wherein the coating can be carried out subsequently and continuously in the printing flow.

As described above, the coating is carried out by solid printing with a resin solution dissolved in an organic solvent. The solution viscosity is preferably 13-20 seconds as measured using a Zahn Cup #3. This solid printing is carried out on the entire surface except the center sealing portion (overlapping surface). The center sealing portion is left because in principle the solid printing has no bad influence for the strength of the sealing portion obtained by adhering both end surfaces of the front and back layers (resin B) using a solvent.

Next, the printed flat film is processed into the tube form by center sealing using a solvent, and cut into a size for wrapping a single battery. This flow will be described referring to Figs. 2 to 4.

Referring to Fig. 2, a printed flat film 10 is slit into widths 30-30a-30b···, shown in the figure, in the rolled-up direction (in the longitudinal arrow direction), i.e., in the longitudinal direction. The width of each longitudinal slit corresponds to a tube for a single battery. The location of the slits 30-30a-30b··· is determined within the width D1, which is provided according to the width of the center seal margin. In Fig. 1, the location of the slits is off the center of the width D1 toward the left. The purpose of this is not to make the pause in the printed picture 20 as much as possible. The films 30-30a-30b···, obtained by the longitudinal slitting, are rolled-up temporarily using a roller.

The size of the printed portion 20 is determined by adding at least the heating shrinkage to the surface area of the side surface of the battery to be wrapped. Specifically, because of heat shrinkage, the size of the tube is set to be larger than the surface area of the side surface of the battery, and thus the diameter of the tube is larger than that of the battery. This facilitates inserting the battery in the tube before shrinkage by heating.

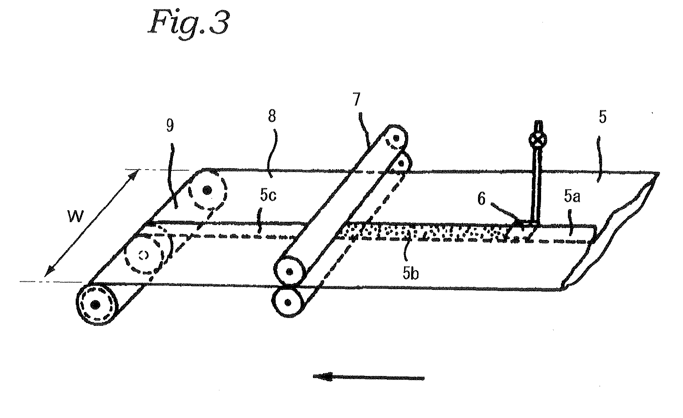

Before sealing, the obtained rolled-up film is folded so that both ends (corresponding to the seal margin) of the film overlap at the center in a manner similar to making an envelope, as shown by the perspective view in Fig. 3. A folded film 5 is sent to a center sealing apparatus and subjected to adhesion sealing using an organic solvent. The overlapping portion is a seal width 5a. The seal width 5a is the portion where adhesion is carried out using an organic solvent. This requires discharge of an appropriate amount of an organic solvent onto the inner surface of the seal width 5a from a nozzle 6. The solvent comes in contact with the film surface within the width 5a, and quickly dissolves or changes the film surface into a swelling state 5b. The film 5 in this state is sent to a stand-by nip roll 7 and compressed completely by the nip roll 7. Thus, a tube 8 with a transparent sealed portion 5c is molded, and rolled-up into roll 9 in the flat state. The folding, center sealing, and rolling-up are carried out on a continuous line running in the arrow direction. The rate is generally 100-250 m/min, preferably 130-200 m/min.

As the solvent, any solvent can be used that dissolves or swells the surfaces of the front and back layers (resin B) of the wrapping film. As a solvent that provides quick and smooth sealing, a good solvent (i.e., cyclohexane) with respect to the resin of the front and back layers (resin B), and a mixture solvent of the good solvent, as the main component, and an appropriate amount of a poor solvent (i.e., methyl ethyl ketone, ethyl acetate, and isopropanol) are exemplified. This mixture solvent is effective for controlling the rate of dissolution or swelling to be an appropriate rate. The seal strength obtained by this solvent is as great as 3 N/cm or more, and even in the case of exposure to a high-temperature atmosphere (e.g., 100°C), there is no possibility of removal.

The sealing method using a solvent can be replaced with methods using an adhesive, heat fusion, high frequency, or the like. However, the sealing method using a solvent is excellent in sealability for the film of the present invention and is more simple and reliable from the view point of production efficiency than other methods. Further, the method using a solvent provides a higher rate of center sealing.

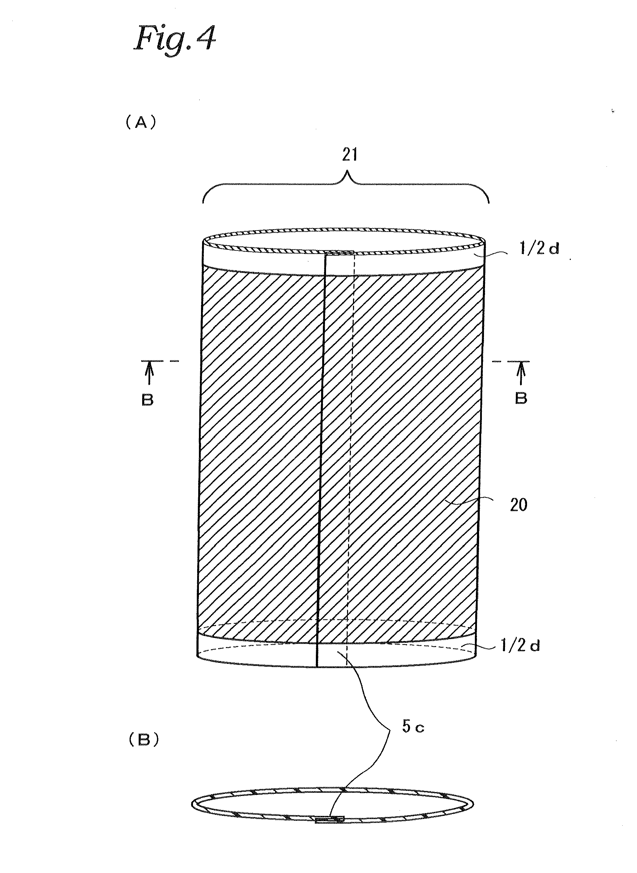

Next, the tube film 8 thus obtained is cut horizontally into a size for wrapping a single battery (a size such that a part of the positive electrode cap and a part of the negative electrode are not wrapped). The portion to be cut is, referring to Fig. 2, located between the space D2 of the non-printed portion, which is provided in the lateral direction above and below the printed portion 20 of the film 10. In Fig. 2, half the width of the D2 corresponds to the width for folding at the same proportion on the positive electrode cap side and the negative electrode side. A perspective view of a single tube 21 that is cut in the above manner is shown in Fig. 4(A), and its cross sectional view taken along the line B-B is shown in Fig. 4(B). The tube 21 has portions 1/2d which are formed by cutting the spaces D2 at half the widths thereof, on the upper and lower surfaces of the tube 21. Both ends of the tube 21 overlap, which constitute the transparent seal portion 5c.

### (Wrapping of a battery)

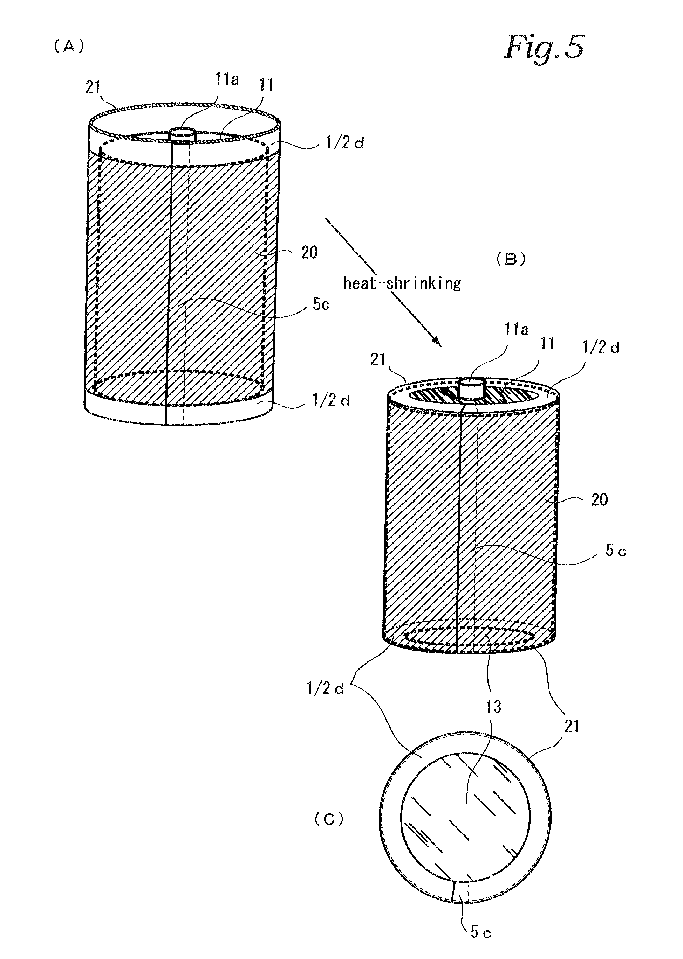

Referring to Fig. 5(a), the cylindrical secondary battery 11 (or primary battery) is inserted in the tube film 21 obtained in the above steps a as if to wrap the battery 11, and the tube is shrunk by heating at a predetermined temperature. Thus, the side surface of the secondary battery 11 is wrapped with the tube film 21 in a tight manner. This wrapping is carried out by, for example, under the following conditions.

First, the battery 11 is inserted in the tube film 21 as if to wrap the battery 11 so that the printed portion 20 of the tube film 21 is located on the side surface of the battery 11. This is passed through a heating tunnel in which the atmosphere temperature is 150-220°C for approximately 5-10 seconds. During this passage, the tube film 21 is shrunk into tight contact with the side surface of the battery 11 and a portion of the top surface (positive electrode cap side) and a portion of the lower surface (negative electrode side) of the battery 11. Thus, the battery 11 is wrapped with the tube film 21. The wrapped battery emerges from the tunnel and then is cooled. In the figure, reference numeral 5c denotes a sealed portion.

The wrapped battery thus completed is shown in Figs. 5(B) and 5(C). Referring to Figs. 5(B) and 5(C), the entire surface of the battery 11 is wrapped by the multilayer heat shrinkable film 21 excluding the positive electrode portion 11a, a portion of the top surface, and a portion of the bottom surface 13 (negative electrode) of the battery 11. A portion of the top surface and a portion of the bottom surface 13 are wrapped by the non-printed portions 1/2d. The printed portion 20 wraps the side surface of the battery 11 in a tight and visually preferable manner without wrinkles.

While the wrapping film of the present invention is preferable for wrapping secondary batteries, the wrapping film of the present invention, of course, can be used for primary batteries.

While the shape of the battery is cylindrical in many cases, wrapping is possible for batteries in any shape (e.g., a rectangular-column shape). It is also possible to collectively wrap a plurality of wrapped batteries.

For a secondary battery of the rapid charging type, in order to distinguish it from a general secondary battery, in some cases, conductive ink is printed on the film surface in the wrapping state. This printing is for identification as the rapid charging type and is because of corresponding to it. The wrapping film surface of the present invention has preferable adhesibility with conductive ink and poses no other problems.

### Example 1

Examples will be described below with comparative examples. The measurement of resilience (stiffness), seal strength, seal whitening, heat shrinkability, heat resistance, content resistance, impact resistance, low/high temperature cycle resistance, and abrasion-resistance, as used in this example, was carried out under the following conditions.

### (Stiffness of the film)

For the obtained three-layered film, Loop Stiffness Tester produced by Toyo Seiki Seisaku-Sho, Ltd. was used. Ten samples of the film were measured and the average value was denoted by mN. A value between 55-62 mN is proper.

### (Seal strength)

The tube film center-sealed using a solvent is opened, and the sealed portion is subjected to 180° peeling with the use of Heidon 17 Peeling Tester produced by Shinto Scientific Co., Ltd. The obtained strength is denoted by N/cm. A value 3 N/cm or more is proper.

### (Seal whitening)

A film is let stand for one hour after center sealing using a solvent, visual inspection for whitening of the sealed portion was carried out. The case of whitening recognized was evaluated × and the case of whitening not recognized was evaluated ○.

### (Heat shrinkability)

Ten samples that has size of longitude × latitude = 100 mm × 100 mm respectively are cut from the obtained coat film. Then, one of these samples is immersed in hot water of 90°C (or in boiling water) for 10 seconds, taken out immediately thereafter and cooled in cold water. Then, length L (mm) in the lateral direction is measured. Then, the value of (100 - L) is calculated. Similar is repeated by the remaining nine samples, and the average value (ten-point average value) of the 10 samples was assumed to be the heat shrinkability in the lateral direction at 90°C hot water.

### (Heat resistance)

Secondary batteries each wrapped in the obtained tube film were lined in ten rows and in two stages, and subjected to air heating at 100°C for 24 hours. The batteries which were lined in the upper stage in two stages are picked up and the presence of abnormality of the film (wrinkles, cracks, tearing, loosening of the wrapping films, peeling of the sealed portion, and blocking abnormality) was visually observed. The case of any of the abnormality recognized is evaluated × and the case of no abnormality recognized is evaluated ○.

### (Content resistance)

The obtained film is immersed in a KOH solution of 30 mass % for 24 hours at room temperature. The film is then taken out of the solution and washed using water and dried. The presence of abnormality of the film was observed in the above manner, and further, dimensional change is measured. The case of exceeding 0.5% is rejected. The evaluation when either of abnormality is found is assumed to be × and the evaluation when each abnormality is not found is assumed to be ○.

### (Impact resistance)

Using secondary batteries each wrapped in the obtained tube film, the following two tests are carried out. The batteries are let stand for 24 hours at room temperature and -20°C. The batteries are tilted by 30 degrees so that the negative electrode surface is at the lower position and dropped perpendicularly from a height of 1 m on concrete. The presence of the crack that penetrated through the film was visually observed. The evaluation when a crack is found is assumed to be × and the evaluation when no crack is found is assumed to be ○.

### (Low/high temperature cycle resistance)

First, secondary batteries each wrapped in the obtained tube film are let stand for 1 hour at -20°C. Next, for 1 hour, the temperature of the batteries is raised to 80°C, and at this temperature the batteries are let stand for 1 hour. After completion of the 1 hour of heating at 80°C, the batteries are cooled back to -20°C. The temperature change between -20 and 80°C is assumed one cycle, and this is repeated 100 times. While the presence of abnormality of the film was observed in the above manner, particularly in this case, a visual inspection is also carried out for presence of movement of position of the films at the top and bottom surface portions of the batteries as a result of secondary shrinkage. The evaluation when either of abnormality is found is assumed to be × and the evaluation when each abnormality is not found is assumed to be ○.

### (Abrasion-resistance)

Using secondary batteries each wrapped in the obtained tube film, the installation and detaching to the charger were repeated 500 times (one installation and detaching once are assumed one time). The films are visually inspected for damage and tearing. The case of damage or tearing recognized is evaluated × and the case of no damage and tearing recognized is evaluated ○.

### (Example 1)

### <Resin A for the intermediate layer>

The resin used here is a resin composition of 82 mass % propylene-ethylene random copolymer (F239V, available from Mitsui Chemicals, Inc.) containing petroleum resin, 10 mass % POE resin of a copolymer of ethylene and butene 1 (Tafmer (Trademark) A4085, available from Mitsui Chemicals, Inc.), and 8 mass % COP resin of a random copolymer (APEL (Trademark) 8009T, available from Mitsui Chemicals, Inc.) of ethylene and cyclic olefin.

### <Resin B for the front and back layers>

The resin used here is a resin composition of 68 mass % COP (APEL (Trademark) 8009T), 32 mass % LLDPE (Evolue (Trademark) SP 2320, available from Mitsui Chemicals, Inc., metallocene catalyst) having 1-hexene as a copolymer component, and 0.08 mass % synthetic silica (EAZ-10, available from Mitsui Chemicals, Inc.) added per 100 mass parts of the two resins.

Using the resins A and B, coextrusion was carried out using a three-layer T die under the following conditions. First, the resin A was supplied into a uniaxial extruder and the resin B was supplied in a separate manner into two uniaxial extruders. The resins were coextruded simultaneously from the three-layer T die of 200°C so that the resin A becomes middle and the resin B is positioned on the both sides. These were received in a chilled roll of 15°C and cooled and solidified. Thus, a three-layered film was obtained.

This film was passed through a roll-drawing machine and subjected to roll-drawing of 1.2 times in the longitudinal direction at 80°C. The film was then passed through a tenter-drawing machine and subjected to tenter-drawing of 5.0 times in the lateral direction at 90°C. Using the tenter-drawing machine, the film was heated to 80°C and heat-cured while subjected to 8% of relaxation mainly in the lateral direction, and cooled down to room temperature. Then, both surfaces of the relaxed film were subjected to corona discharge treatment at an intensity of 3.5×10³ J/m² each, and the film was rolled up. (The wet tensions of the front and back layer surfaces were 46 mN/m.) Finally, this rolled-up film was let stand at 35°C for 24 hours and subjected to aging. The total thickness of the heat shrinkable 3 layered film thus obtained (hereinafter referred simply as a three-layered film) was 70 µm. The thickness of the intermediate film layer (A) was 46 µm, and the thickness of the front and back layers (B) was 12 µm each.

One surface of the obtained three-layered film was subjected to multiple imposition printing using a gravure printer under the following conditions. The area of the unit picture is 49 mm wide × 50 mm long (the shaded portion 20 in Fig. 2). Such a gravure printing roll was used that a multiplicity of unit pictures (intermittent multiple pictures) were laid out with longitudinal non-printed portion widths (D1 in Fig. 2) of 3 mm each and lateral non-printed portion widths (D2 in Fig. 2) of 2 mm each. Using urethane two-liquid type curable ink (one of a series of Color Ink NS PMS with EXP11050 as the curing agent, available from Osaka Printing Ink MFG. Co., Ltd.), continuous multi-color printing was carried out (hereinafter simply referred to as a printed film).

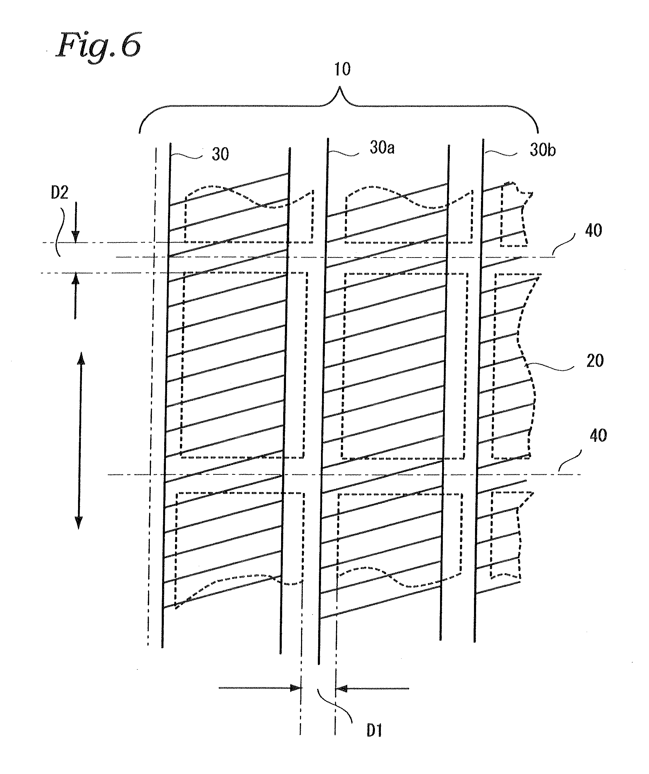

Next, the printed film was turned over, and on the other surface, an overcoat layer (resin D) was coated by continuous printing coating with the use of a gravure roll under the following conditions (hereinafter simply referred to as a coat film). First, the coating area is 50 mm for the lateral width, and the longitudinal width (length) is the entire length in the longitudinal direction of the roll film. The position of coating is shown by the shaded portion in Fig. 6. The overcoat layer is not superposed on the print portion 20 so that the size of the overcoat layer may become the same as the size of the print portion 20. This reason is to effectively carry out center sealing, described later.

Using, as a coating solution, an acrylic resin solution (transparent) for coating (coating medium EXP-16009, available from Osaka Printing Ink MFG. Co., Ltd.), continuous gravure coating was carried out followed by drying. The thickness of the obtained overcoat layer (D) was 1.0 µm.

The obtained coat film was slit in the flow direction to the following lateral width, thus obtaining a (center sealing) rolled film (hereinafter simply referred to as a slit film). The lateral width is adjusted to 52 mm by cutting the non-printed portion on the left side and the non-printed portion on the right side to take out printed portion (49 mm). The cutting portion of the right-side non-printed portion is a position left from the print portion by 1 mm and that of the left-side non-printed portion is a position left from the print portion by 2 mm (i.e., the same position as edge of the overcoat layer (D) on the left-side non-printed portion) .

The slit film is taken in the form of a rolled film having pictures multiply impositioned in the flow direction and having an appropriate width for wrapping a single secondary battery.

Next, the slit film was subjected to center sealing using a solvent on the following conditions. First, the both ends of the slit film are continuously superposed with a seal width of 2 mm so that the overcoat layer (D) may turn to the outside. This film is supplied to a center sealing apparatus as shown in Fig. 3. A mixture solvent of 100 mass parts cyclohexane and 5 mass parts methyl ethyl ketone is continuously applied from the nozzle 6 to the superposed portion, followed by continuous pressure-bonding using the roll 7, thus molding the film into the form of a tube. This is rolled up in a flat state. The processing rate here was 150 m/min. The tube flat film thus obtained had a folded diameter W of 24 mm.

Next, each of the non-printed portions above and below the printed portion of the tube flat film was cut at the center in the lateral direction (i.e., a position left from the upper and lower edges of the printed portion by 1 mm was cut). Thus, a tube film for a single secondary battery was obtained. Next, a secondary battery was inserted in the tube so that the secondary battery was fixed to a predetermined portion, and heat-shrunk to wrap the battery. Thus, a wrapped secondary battery was obtained.

Referring to Fig. 5(A), the position where the battery is inserted is selected such that the printed portion 20 is on the side surface of the battery 11, and the upper and lower non-printed portions (1/2d) with 1-mm-width protrude upward and downward from the edges of the side surfaces. The upper and lower non-printed portions (1/2d) with 1-mm-width are folded inwardly by 90 degrees at the edges of the top surface (the positive electrode cap portion) and the bottom surface (the negative electrode portion), thus wrapping the battery 11. The secondary battery 11 having the tube film 21 wrapped on the predetermined position is passed through a 200°C hot-blast tunnel for 10 seconds and sent out of the system and cooled down to room temperature.

As exemplified by the perspective view shown in Fig. 5(B), the wrapped secondary battery 11 thus obtained had no wrinkles and was wrapped in a completely tight state with a visually preferable appearance.

### (Example 2)

Example 2 was carried out in the same manner as example 1 except that different resin for the intermediate layer and different resin for the front and back layers were used. The resin for the the intermediate layer used here is a resin composition of: 55 mass % random copolymer resin of ethylene and 1-hexene (LLDPE resin (250GF, available from Ube-Maruzen Co., Ltd) having 1-hexene as a copolymer component); 37 mass % LDPE resin containing petroleum resin (MR-50, available from Ube-Maruzen Co., Ltd, a mixture of 50 mass % LDPE resin and 50 mass % petroleum resin that is a hydrogenated product of alicyclic resin (cyclopentadiene)); and 8 mass % COP resin (APEL 8008T, available from Mitsui Chemicals, Inc.) of a random copolymer of ethylene and cyclic olefin.

The resin for the front and back layers used here is a resin composition of: 68% COP resin (APEL 8008T, available from Mitsui Chemicals, Inc.) of a random copolymer of ethylene and cyclic olefin, described above; 32 mass % LLDPE resin (Evolue (registered trademark) SP 1520, metallocene catalyst, available from Mitsui Chemicals, Inc.) having 1-hexene as a copolymer component; and 0.08 mass % synthetic silica (EAZ-10, available from Mitsui Chemicals, Inc.) added per 100 mass parts of the two resins.

Using the wrapped battery thus obtained, the measurement of resilience (stiffness), seal strength, seal whitening, heat shrinkability, heat resistance, content resistance, impact resistance, low/high temperature cycle resistance, and wear resistance was carried out. The results are shown in Table 1.

**[Table 1]**

| Items | Ex. 1 | Ex. 2 | Com.Ex 1 | Com.Ex 2 | Com.Ex 3 | Com.Ex 4 | Com.Ex 5 |
|---|---|---|---|---|---|---|---|
| Intermediate layer | F239V (82parts) | 250GF (55parts) | F239V (82parts) | F239V (82parts) | F239V (82parts) | F239V (87parts) | F239V (40parts) |
| | A4085 (10parts) | MR50 (37parts) | A4085 (10parts) | A4085 (10parts) | A4085 (10parts) | A4085 (10parts) | A4085 (10parts) |
| | 8009T (8parts) | 8008T (8parts) | 8009T (8parts) | 8009T (8parts) | 8009T (8parts) | 8009T (3parts) | 8009T (50parts) |
| Front/back layer | 8009T (68parts) | 8008T (68parts) | 8009T (68parts) | 8009T (93parts) | 8009T (48parts) | 8009T (68parts) | 8009T (68parts) |
| | SP2320 (32parts) | SP1520 (32parts) | SP2320 (32parts) | SP2320 (7parts) | SP2320 (52parts) | SP2320 (32parts) | SP2320 (32parts) |
| Overcoat | Coated | Coated | Not Coated | Coated | Coated | Coated | Coated |
| Resilience mN | 59 | 58 | 59 | 61 | 50 | 47 | 65 |
| Seal strength N/cm | 3.3 | 3.4 | 3.3 | 2.8 | 2.1 | 3.0 | 3.1 |
| Seal whitening | ○ | ○ | ○ | × | ○ | ○ | ○ |
| Heat shrinkability (%) | 52 | 51 | 52 | 51 | 45 | 40 | 53 |
| Heat resistance | ○ | ○ | × | × | ○ | ○ | ○ |
| Content resistance | ○ | ○ | ○ | ○ | ○ | ○ | ○ |
| Impact resistance | ○ | ○ | ○ | ○ | ○ | ○ | × |
| low/high temperature cycle resistance | ○ | ○ | ○ | ○ | ○ | ○ | × |
| Abrasion-resistance | ○ | ○ | × | ○ | ○ | ○ | ○ |

### (Comparative Example 1)

First, a printed three-layered heat shrinkable film was obtained on the same conditions as in example 1 except that the overcoat layer (D) was not provided. In the same manner as in example 1, subsequently, a slit film, a long tube film, and a tube film for a single secondary battery were obtained. A secondary battery is inserted in the tube film as if to cover the battery and heat shrunk, thus obtaining a wrapped secondary battery. The obtained wrapped film was subjected to measurement of various items in the same manner as in example 1. The results are shown in Table 1.

### (Comparative Example 2)

A printed three-layered heat shrinkable film was obtained on the same conditions as in example 1 except that in place of the resin B for the front and back layers (B) in example 1, a resin composition was used having: 93 mass % COP resin (APEL 8009T, available from Mitsui Chemicals, Inc.); 7 mass % LLDPE resin (Evolue (registered trademark) SP 2320, metallocene catalyst, available from Mitsui Chemicals, Inc) having 1-hexene as a copolymer component; and 0.6 mass % synthetic silica (EAZ-10, available from Mitsui Chemicals, Inc.) added per 100 mass parts of the two resins. In the same manner as in example 1, subsequently, a coat film, a slit film, and a long tube film, were obtained. A secondary battery is inserted in the tube film as if to cover the battery and heat shrunk, thus obtaining a wrapped secondary battery. The obtained wrapped film was subjected to measurement of various items in the same manner as in example 1. The results are shown in Table 1.

### (Comparative Example 3)

A printed three-layered heat shrinkable film was obtained on the same conditions as in example 1 except that in place of the resin B for the front and back layers (B) in example 1, a resin composition was used having: 48 mass % COP resin (APEL 8009T, available from Mitsui Chemicals, Inc.); 52 mass % LLDPE resin (Evolue (registered trademark) SP 2320, metallocene catalyst, available from Mitsui Chemicals, Inc) having 1-hexene as a copolymer component; and 0.6 mass % synthetic silica (EAZ-10, available from Mitsui Chemicals, Inc.) added per 100 mass parts of the two resins. In the same manner as in example 1, subsequently, a coat film, a slit film, a long tube film, and a tube film for a single secondary battery were obtained. A secondary battery is inserted in the tube film as if to cover the battery and heat shrunk, thus obtaining a wrapped secondary battery. The obtained wrapped film was subjected to measurement of various items in the same manner as in example 1. The results are shown in Table 1.

### (Comparative Example 4)

A printed three-layered heat shrinkable film was obtained on the same conditions as in example 1 except that in place of the resin A for the intermediate layer (A) in example 1, a resin composition was used having: 87 mass % propylene-ethylene random copolymer (F239V, available from Mitsui Chemicals, Inc.) containing petroleum resin; 10 mass % POE resin of a block copolymer of ethylene and butene 1 (Tafmer A4085, available from Mitsui Chemicals, Inc.), and 3 mass % COP resin of a random copolymer (APEL 8009T, available from Mitsui Chemicals, Inc.) of ethylene and cyclic olefin. In the same manner as in example 1, subsequently, a coat film, a slit film, a long tube film, and a tube film for a single secondary battery were obtained. A secondary battery is inserted in the tube film as if to cover the battery and heat shrunk, thus obtaining a wrapped secondary battery. The obtained wrapped film was subjected to measurement of various items in the same manner as in example 1. The results are shown in Table 1.

### (Comparative Example 5)

A printed three-layered heat shrinkable film was obtained on the same conditions as in example 1 except that in place of the resin A for the intermediate layer (A) in example 1, a resin composition was used having: 40 mass % propylene-ethylene random copolymer (F239V, available from Mitsui Chemicals, Inc.) containing petroleum resin; 10 mass % POE resin of a block copolymer of ethylene and butene 1 (Tafmer A4085, available from Mitsui Chemicals, Inc.), and 50 mass % COP resin of a random copolymer (APEL 8009T, available from Mitsui Chemicals, Inc.) of ethylene and cyclic olefin. In the same manner as in example 1, subsequently, a coat film, a slit film, a long tube film, and a tube film for a single secondary battery were obtained. A secondary battery is inserted in the tube film as if to cover the battery and heat shrunk, thus obtaining a wrapped secondary battery. The obtained wrapped film was subjected to measurement of various items in the same manner as in example 1. The results are shown in Table 1.

The Embodiments herein described are to be considered in all respects as illustrative and not restrictive. The scope of the invention should be determined not by the Embodiments illustrated, but by the appended claims, and all changes which come within the meaning and range of equivalency of the appended claims are therefore intended to be embraced therein.

### INDUSTRIAL APPLICABILITY

The present invention is used for multilayer heat shrinkable films for wrapping secondary batteries one by one.

## Claims

1. A multilayer heat shrinkable film comprising:
an intermediate layer;
a front surface layer and a back surface layer so arranged as to sandwich the intermediate layer; and
an overcoat layer arranged on top of the front surface layer, wherein:
the intermediate layer contains first cyclic olefin resin and a random copolymer of ethylene and another α-olefin or a random copolymer of propylene and another α-olefin ; and
the front surface layer and the back surface layer respectively contain second cyclic olefin resin and linear low-density polyethylene resin.

2. The multilayer heat shrinkable film according to claim 1, wherein:
the random copolymer is included by 95-55 mass% and the first cyclic olefin resin is included by 5-45 mass% in the intermediate layer; and
the second cyclic olefin resin is included by 55-90 mass% and the linear low-density polyethylene resin is included by 45-10 mass% in the front surface layer and the back surface layer, respectively.

3. The multilayer heat shrinkable film according to claim 1, wherein the α-olefin has 2 to 12 carbon atoms.

4. The multilayer heat shrinkable film according to claim 1, wherein the overcoat layer is formed of acrylic resin, urethane resin, or nylon resin.

5. The multilayer heat shrinkable film according to claim 4, wherein the overcoat layer is formed of acrylic resin.

6. The multilayer heat shrinkable film according to claim 1, wherein the intermediate layer is thicker than the front surface layer and the back surface layer.

7. The multilayer heat shrinkable film according to claim 1, the entire thickness is 30-80 µm.

8. The multilayer heat shrinkable film according to claim 1, wherein the thickness of the overcoat layer is 0.2-2.0 µm.

9. The multilayer heat shrinkable film according to claim 8, wherein the thickness of the overcoat layer is 0.5-1.5 µm.

10. The multilayer heat shrinkable film according to claim 1, wherein the multilayer heat shrinkable film is in a form of a tube formed by folding a flat multilayer heat shrinkable film, the overcoat layer being on the outside, both ends of the flat multilayer heat shrinkable film overlapping, the overlapping ends being sealed with a solvent.

11. A wrapped battery wherein the whole is wrapped with a multilayer heat shrinkable film excluding a positive electrode portion formed on an uppermost surface of the battery and a portion of a negative electrode formed on a bottom surface of the battery, wherein:
the multilayer heat shrinkable film has an intermediate layer, a front surface layer and a back surface layer so arranged as to sandwich the intermediate layer, and an overcoat layer arranged on top of the front surface layer;
the intermediate layer contains first cyclic olefin resin and a random copolymer of ethylene and another α-olefin or a random copolymer of propylene and another α-olefin;
the front surface layer and the back surface layer respectively contain second cyclic olefin resin and linear low-density polyethylene resin;
the multilayer heat shrinkable film is processed into a form of a tube, the overcoat layer on the outside; and
the tube of the multilayer heat shrinkable film is placed over the battery as if to wrap the battery and heat shrunk.

12. The wrapped battery according to claim 11, wherein the multilayer heat shrinkable film is in a form of a tube formed by folding a flat multilayer heat shrinkable film, the overcoat layer being on the outside, both ends of the flat multilayer heat shrinkable film overlapping, the overlapping ends being sealed with a solvent.

13. The wrapped battery according to claim 11, wherein:
the random copolymer is included by 95-55 mass% and the first cyclic olefin resin is included by 5-45 mass% in the intermediate layer; and
the second cyclic olefin resin is included by 55-90 mass% and the linear low-density polyethylene resin is included by 45-10 mass% in the front surface layer and the back surface layer, respectively.

14. The wrapped battery according to claim 11, wherein the α-olefin has 2 to 12 carbon atoms.

15. The wrapped battery according to claim 11, wherein the overcoat layer is formed of acrylic resin, urethane resin, or nylon resin.

16. The wrapped battery according to claim 15, wherein the overcoat layer is formed of acrylic resin.

17. The wrapped battery according to claim 11, wherein the intermediate layer is thicker than the front surface layer and the back surface layer.

18. The wrapped battery according to claim 11, wherein the thickness of the overcoat layer is 0.2-2.0 µm.

19. The wrapped battery according to claim 18, wherein the thickness of the overcoat layer is 0.5-1.5 µm.

20. The wrapped battery according to claim 11, wherein the battery is a secondary battery.
